# EUROPEAN PATENT SPECIFICATION

(11) **EP 2 635 635 B1**
(45) Date of publication and mention of the grant of the patent: **18.09.2019**
(21) Application number: 10859169.4
(22) Date of filing: 05.11.2010
(51) Int. Cl.: C08L 67/02, C08L 69/00

(54) **FLAME-RESISTANT POLYESTER-POLYCARBONATE COMPOSITIONS, METHODS OF MANUFACTURE, AND ARTICLES THEREOF**
FLAMMFESTE POLYESTER-POLYCARBONAT-ZUSAMMENSETZUNGEN, VERFAHREN ZU IHRER HERSTELLUNG UND ARTIKEL DARAUS
COMPOSITIONS DE POLYESTER-POLYCARBONATE RÉSISTANTES À LA FLAMME, LEURS PROCÉDÉS DE FABRICATION ET ARTICLES CONSTITUÉS DE CELLES-CI

(43) Date of publication of application: 11.09.2013
(73) Proprietor: SABIC Global Technologies B.V., 4612 PX Bergen op Zoom (NL)
(72) Inventor: WAN, Shun, Shanghai 200333 (CN); GISBERGEN, Josephus Gerardus M. van, 4617 MK Bergen op Zoom, Noord Brabant (NL); WANG, Min, Shanghai 200125 (CN)
(74) Representative: Stiebe, Lars Magnus
(86) International application number: PCT/CN2010/078461
(87) International publication number: WO 2012/058821

(56) References cited:
- EP-A1- 0 899 306
- EP-A1- 1 624 025
- WO-A1-2009/042755
- CN-A- 101 451 012
- US-A1- 2006 205 848
- US-A1- 2009 088 514
- US-A1- 2009 209 695
- US-A1- 2009 306 258
- US-A1- 2010 152 344

## Description

### BACKGROUND OF THE INVENTION

There are many applications, particularly in the use of electrical and electronic parts, where flame resistant polymer compositions are desired that combine properties of good chemical resistance, high impact, and high heat resistance, in which the flame resistant properties are obtained using non-halogenated flame resistant additives. An alloy of polyester with polycarbonate can offer some improvement with respect to the properties of polycarbonates. Commercialized flame resistant polyester-polycarbonate materials with an attractive balance of properties are still relatively scarce in the market place, although a number of patents have disclosed such alloys for many years. One reason be that compositions in this field can be limited in the maximum content of polyester that can be included in the composition, which leads to an alloy closer to pure polycarbonate in properties rather than a more balanced polyester-polycarbonate composition. For example, U.S. Patent No. 7,0675,67 has placed a limit on polyester content, a maximum of 12 wt.%, which would limit, for example, the chemical resistance and processability of the final composition.

Polymer composition comprising an alloy of a polycarbonate and polyester such as polyalkylene terephthalate have been rendered flame resistant without any chlorine and bromine atoms, using phosphorus-based flame resistant compounds. For example, U.S. Patent No. 5,030,675 discloses that a flame resistant polymer composition containing no chlorine or bromine elements can be obtained by incorporating an emulsion-ABS graft copolymer, a monophosphate flame retardant, and a fluorinated polyolefin into an alloy of polycarbonate and polyalkylene terephthalate. This composition is distinguished by improved weld line strength for molding, but the flame retardant additives tend to bleed out, which can lead to considerable disruption during the processing operations. The bleeding of the flame retardants in such compositions, however, can be solved by the use of oligomeric organophosphorus flame retardants, as proposed in U.S. Patent No. 7,067,567.

The polyester-polycarbonate compositions described in the above-noted patents contain, apart from an organophosphorus flame retardant, fluorinated polyolefin copolymer as an anti-dripping agent and an impact modifier such as a rubber-based graft copolymer or a polyolefin-based epoxy copolymer. While exhibiting good flame resistance, such compositions can encounter the problem that some other important properties such as notched impact resistance or heat resistance are much lower than the compositions without the organic phosphate. Moreover, the impact modifiers thus used are easily combustible materials, requiring relatively higher amounts of the organic phosphate to be added to keep flame resistance of the material at the acceptable levels. As a result, heat performance of the polymer composition, such as heat distortion temperature and Vicat softening temperature, deteriorate further, limiting the range of compositions with attractive properties, especially the maximum amount of polyester that can be used. U.S. Patent No. 7,067,567 shows examples that require limiting the use of polyester to a maximum of 12 wt.%, which in turn would limit the chemical resistance of the final composition.

Diorganosiloxane-polycarbonate block copolymers are well known in the prior art, for example, U.S. Patent Nos. 3821325, 3419635, 3419634, and 3832419. SABIC IP for example has commercially available grades that are sold under the LEXAN EXL trade name. The siloxane domains are known to confer higher impact on the polycarbonate compositions. To date, however, the uses of EXL polymers as impact modifiers to make halogen-free polyester-polycarbonate compositions with an attractive property balance in terms of chemical, heat, and impact resistance, in addition to good flame resistance properties, have not been fully realized or described, nor is there any indication that the maximum polyester content in polycarbonate compositions can be improved remarkably by using such EXL polymers. Although U.S. Patent No. 7,067,567 provides some examples of siloxane being incorporated in a graft rubber base, the same restrictions apply to the maximum polyester level in those examples as in the formulation comprising other grafted rubbers.

Further, WO2009/042755 A1 discloses a copolycarbonate composition comprising a blend of a polycarbonate-polysiloxane copolymer and a terephthalate polymer. The blend has a combination of good melt volume rate, good fatigue resistance, and high ductility at low temperatures. However, the disclosed compositions do not comprise a flame retardant. Hence, as above an attractive property balance in terms of chemical, heat, and impact resistance, in addition to good flame resistance properties, are not realized or described.

Finally, US 2009/209695 A1 discloses thermoplastic compositions having improved mechanical properties such as notched Izod impact and comprising a polycarbonate polymer, a polyester polymer, and optionally a polylactic acid polymer. The compositions may further comprise additional components, such as quenchers, flow promoters, antioxidants, heat stabilizers, anti-hydrolysis stabilizers, light stabilizers, UV absorbers, plasticizers, lubricants, mold release agents, anti-static agents, pigments, dyes, flame retardants, anti-drip agents, blowing agents, and the like. However, it does not teach flame retardant compositions with a balance of chemical, heat, and impact resistance.

In view of the above, there is a need for a polyester-polycarbonate composition with good flame resistance properties that exhibits at least two of improved impact resistance, heat resistance, and chemical resistance, especially when such compositions contain higher polyester content than that in the compositions described in the prior art.

Furthermore, there is a need for providing a polymer composition in which the polyester component can be provided, as occasion demands, by post-consumer recycled polyester polymer, wherein important properties such as flame resistance, chemical resistance, heat resistance, as well as other physical properties, are at least substantially maintained.

### SUMMARY OF THE INVENTION

In particular, a thermoplastic composition comprises, based on the total weight of the composition:
(a) from more than 12 to 30 wt.% of a polyester;
(b) from 21.7 to 81.7 wt.% of a polycarbonate;
(c) from 5 to less than 60 wt.% of an organopolysiloxane-polycarbonate block copolymer comprising from 10 to 50 wt.% of polydiorganosiloxane units;
(d) from 1 to 20 wt.% of an organophosphorus flame retardant;
(e) from 0.02 to 5 wt.% of a fluorinated polyolefin;
(f) ofree of an impact modifier selected from the group consisting of elastomer-based graft copolymers and elastomer-based block copolymers; and
(g) from 0.1 to 5 wt.% of an additive composition comprising an antioxidant, a quencher, an ultraviolet light stabilizer, or a combination thereof, wherein the composition has:
   less than 1000 ppm of a bromine- and/or chlorine-containing compound,
   a flow of 25 to 45 per 10 minutes at 265°C and a shear load of 5 kg as measured in accordance with ASTM D1238,
   a Vicat softening temperature of greater than 100°C, measured in accordance with ASTM 1525 at 50 Newtons and a heating rate of 120°C/hour,
   a notched Izod impact strength of greater than or equal to 400 J/m, measured at 23°C in accordance with ASTM D256 on a sample bar molded from the composition and having a thickness of 3.2, and
   a UL-94 flammability rating of V0 measured on a molded sample having a thickness of 1.5 mm.

### DETAILED DESCRIPTION OF THE INVENTION

The invention is based on the discovery that a high level of flame resistance can be imparted to a polyester-polycarbonate molding compositions, specifically a VO-rating in the Underwriters' Laboratory Flammability Test, and which can be carefully balanced in terms of heat mechanical properties, impact resistance, and chemical resistance using little or no chlorinated or brominated flame retardant additives. Such a balance of properties can be obtained using a higher polyester content than in comparative compositions. An especially advantageous embodiment of this invention is when a polyester component is obtained largely from post-consumer recycled polyester polymer.

More particularly, the invention is based on the discovery that when an polydiorganosiloxane-polycarbonate block copolymer is used as impact modifier alone or in combination with a small amount of other impact modifiers for a flame retardant polymer composition comprising a thermoplastic polyester, a polycarbonate, an organic organophosphorus flame retardant, specifically an oligomeric organophosphorus flame retardant, and a fluorinated polyolefin copolymer, it is possible to obtain an advantageous balance of properties that include high flame resistance, good impact resistance, and high heat resistance. The compositions can contain relatively higher polyester content and relatively higher impact modifier as compared with known compositions.

As used herein the singular forms "a," "an," and "the" include plural referents. The term "combination" is inclusive of blends, mixtures, alloys, reaction products, and the like. Unless defined otherwise, technical and scientific terms used herein have the same meaning as is commonly understood by one of skill. Compounds are described using standard nomenclature. The term "and a combination thereof' is inclusive of the named component and/or other components not specifically named that have essentially the same function.

Other than in the operating examples or where otherwise indicated, all numbers or expressions referring to quantities of ingredients, reaction conditions, and the like, used in the specification and claims are to be understood as modified in all instances by the term "about." Various numerical ranges are disclosed in this patent application. Because these ranges are continuous, they include every value between the minimum and maximum values. The endpoints of all ranges reciting the same characteristic or component are independently combinable and inclusive of the recited endpoint. Unless expressly indicated otherwise, the various numerical ranges specified in this application are approximations. The term "from more than 0 to" an amount means that the named component is present in some amount more than 0, and up to and including the higher named amount.

All ASTM tests and data are from the 2003 edition of the Annual Book of ASTM Standards unless otherwise indicated.

For the sake of clarity, the terms "terephthalic acid group," "isophthalic acid group," "butanediol group," and "ethylene glycol group" have the following meanings. The term "terephthalic acid group" in a composition refers to a divalent 1,4-benzene radical (-1,4-(C₆H₄)-) remaining after removal of the carboxylic groups from terephthalic acid-. The term "isophthalic acid group" refers to a divalent 1,3-benzene radical (-(-1,3- C₆H₄)-) remaining after removal of the carboxylic groups from isophthalic acid. The "butanediol group" refers to a divalent butylene radical (-(C₄H₈)-) remaining after removal of hydroxyl groups from butanediol. The term "ethylene glycol group" refers to a divalent ethylene radical (-(C₂H₄)-) remaining after removal of hydroxyl groups from ethylene glycol. With respect to the terms "terephthalic acid group," "isophthalic acid group," "ethylene glycol group," "butane diol group," and "diethylene glycol group" being used in other contexts, e.g., to indicate the weight percent (wt.%) of the group in a composition, the term "isophthalic acid group(s)" means the group having the formula (-O(CO)C₆H₄(CO)-), the term "terephthalic acid group" means the group having the formula (-O(CO)C₆H₄(CO)-), the term diethylene glycol group means the group having the formula (-O(C₂H₄)O(C₂H₄)-), the term "butanediol group" means the group having the formula (-O(C₄H₈)-), and the term "ethylene glycol groups" means the group having formula (-O(C₂H₄)-).

In an embodiment, a thermoplastic composition comprises, based on the total weight of the composition:
from more than 12 to 30 wt.% of a polyester;
from 21.7 to 81.7 wt.% of a polycarbonate;
from 5 to less than 60 wt.% of an organopolysiloxane-polycarbonate block copolymer comprising from 10 to 50 wt.% of polydiorganosiloxane units;
from 1 to 20 wt.% of an organophosphorus flame retardant;
from 0.02 to 5 wt.% of a fluorinated polyolefin;
free of an impact modifier selected from the group consisting of elastomer-based graft copolymers and elastomer-based block copolymers; and
from 0.1 to 5 wt.% of an additive composition comprising an antioxidant, a quencher, an ultraviolet light stabilizer, or a combination thereof, wherein the composition has:
   less than 1000 ppm of a bromine- and/or chlorine-containing compound,
   a flow of 25 to 45 per 10 minutes at 265°C and a shear load of 5 kg as measured in accordance with ASTM D1238,
   a Vicat softening temperature of greater than 100°C, measured in accordance with ASTM 1525 at 50 Newtons and a heating rate of 120°C/hour,
   a notched Izod impact strength of greater than or equal to 400 J/m, measured at 23°C in accordance with ASTM D256 on a sample bar molded from the composition and having a thickness of 3.2, and
   a UL-94 flammability rating of V0 measured on a molded sample having a thickness of 1.5 mm.

Polyesters for use in the thermoplastic compositions have repeating structural units of formula 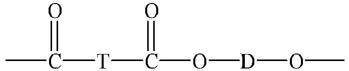 wherein each T is independently the same or different divalent C6-10 aromatic group derived from a dicarboxylic acid or a chemical equivalent thereof, and each D is independently a divalent C2-4 alkylene group derived from a dihydroxy compound or a chemical equivalent thereof. Copolyesters containing a combination of different T and/or D groups can be used. Chemical equivalents of diacids include the corresponding esters, alkyl esters, e.g., C1-3 dialkyl esters, diaryl esters, anhydrides, salts, acid chlorides, acid bromides, and the like. Chemical equivalents of dihydroxy compounds include the corresponding esters, such as C1-3 dialkyl esters, diaryl esters, and the like. The polyesters can be branched or linear.

Examples of C6-10 aromatic dicarboxylic acids that can be used to prepare the polyesters include isophthalic acid, terephthalic acid, 1,2-di(p-carboxyphenyl)ethane, 4,4'-dicarboxydiphenyl ether, 4,4'-bisbenzoic acid, and the like, and 1,4- or 1,5-naphthalene dicarboxylic acids and the like. A combination of isophthalic acid and terephthalic acid can be used, wherein the weight ratio of isophthalic acid to terephthalic acid is 91:9 to 2:98, specifically 25:75 to 2:98.

Exemplary diols useful in the preparation of the polyesters include C2-4 aliphatic diols such as ethylene glycol, 1,2-propylene glycol, 1,3-propylene glycol, 1,4-butane diol, 1,2-butylene diol, 1,4-but-2-ene diol, and the like. In one embodiment, the diol is ethylene and/or 1,4-butylene diol. In another embodiment, the diol is 1,4-butylene diol.

Specific exemplary polyesters include poly(ethylene terephthalate) (PET), poly(1,4-butylene terephthalate) (PBT), poly(ethylene naphthalate) (PEN), poly(butylene naphthalate) (PBN), and poly(1,3-propylene terephthalate) (PPT). In one embodiment, the polyester is PET and/or PBT. In still another specific embodiment, the polyester is PBT. It is to be understood that such terephthalate-based polyesters can include small amounts of isophthalate esters as well.

] In order to attain the desired combination of chemical resistance and other desired properties, the polyester has a weight average molecular weight of greater than or equal to 40,000 g/mol, or greater or equal to 70,000, up to 125,000 g/mol, specifically 70,000 to 200,000 g/mol, against polystyrene standards, as measured by gel permeation chromatography in chloroform/hexafluoroisopropanol (5:95, volume /volume ratio) at 25°C. The polyesters can have an intrinsic viscosity (as measured in phenol/tetrachloroethane (60:40, volume / volume ratio) at 25°C) of 0.5 or 0.8 to 2.0 deciliters per gram.

In addition to the above polyesters, other polyesters can optionally be present in the composition (in an amount of less than 10 wt.% of the composition), provided that such polyesters do not significantly adversely affect the desired properties of the composition. Other polyesters that can be present are copolyesters derived from an aromatic dicarboxylic acid (specifically terephthalic acid and/or isophthalic acid) and a mixture comprising a linear C2-6 aliphatic diol (specifically ethylene glycol and butylene glycol); and a C6-12 cycloaliphatic diol (specifically 1,4-hexane diol, dimethanol decalin, dimethanol bicyclooctane, 1,4-cyclohexane dimethanol and its cis- and trans-isomers, 1,10-decane diol, and the like) or a linear poly(C2-6 oxyalkylene) diol (specifically, poly(oxyethylene) glycol) and poly(oxytetramethylene) glycol). The ester units comprising the two or more types of diols can be present in the polymer chain as individual units or as blocks of the same type of units. Specific esters of this type include poly(1,4-cyclohexylene dimethylene co-ethylene terephthalate) (PCTG) wherein greater than 50 mol% of the ester groups are derived from 1,4-cyclohexanedimethanol; and poly(ethylene-co-1,4-cyclohexylenedimethylene terephthalate) wherein greater than 50 mol% of the ester groups are derived from ethylene (PTCG). Also included are thermoplastic poly(ester-ether) (TPEE) copolymers such as poly(ethylene-co-poly(oxytetramethylene) terephthalate. Also contemplated for use herein are any of the above polyesters with minor amounts, e.g., from 0.5 to 5 wt.%, of units derived from aliphatic acid and/or aliphatic polyols to form copolyesters. The aliphatic polyols include glycols, such as poly(ethylene glycol) or poly(butylene glycol). Such additional polyesters include, for example, poly(1,4-cyclohexylendimethylene terephthalate) (PCT), poly(1,4-cyclohexylenedimethylene cyclohexane-1,4-dicarboxylate) also known as poly(cyclohexane-14-dimethanol cyclohexane-1,4-dicarboxylate) (PCCD), and poly(1,4-cyclohexylenedimethylene terephthalate-co-isophthalate) (PCTA).

The polyester component can comprise a modified poly(butylene terephthalate), that is, a PBT derived from poly(ethylene terephthalate), for example waste PET such as soft drink bottles. The PET-derived PBT (referred to herein for convenience as "modified PBT") (1) can be derived from a poly(ethylene terephthalate) component selected from the group consisting of poly(ethylene terephthalate), poly(ethylene terephthalate) copolymers, and a combination thereof, and (2) has at least one residue derived from the poly(ethylene terephthalate) component. The modified PBT can further be derived from a biomass-derived 1,4-butanediol, e.g., corn derived 1,4-butanediol or a 1,4-butanediol derived from a cellulosic material. Unlike conventional molding compositions containing virgin PBT (PBT that is derived from monomers), the modified PBT contains a poly(ethylene terephthalate) residue, e.g., a material such as ethylene glycol and isophthalic acid groups (components that are not present in virgin, monomer-based PBT). Use of modified PBT can provide a valuable way to effectively use underutilized scrap PET (from post-consumer or post-industrial streams) in PBT thermoplastic molding compositions, thereby conserving non-renewable resources and reducing the formation of greenhouse gases, e.g., CO₂.

The residue derived from the poly(ethylene terephthalate) component and which is present in the modified PBT can be selected from the group consisting of ethylene glycol groups, diethylene glycol groups, isophthalic acid groups, antimony-containing compounds, germanium-containing compounds, titanium-containing compounds, cobalt-containing compounds, tin-containing compounds, aluminum, aluminum salts, 1,3-cyclohexane dimethanol isomers, 1,4-cyclohexane dimethanol isomers, the cis isomer of 1,3-cyclohexane dimethanol, the cis isomer of 1,4-cyclohexane dimethanol, the trans isomer of 1,3-cyclohexane dimethanol, the trans isomer of 1,4-cyclohexane dimethanol, alkali salts, alkaline earth metal salts, including calcium, magnesium, sodium and potassium salts, phosphorous-containing compounds and anions, sulfur-containing compounds and anions, naphthalene dicarboxylic acids, 1,3-propanediol groups, and combinations thereof.

Depending on factors such as the type and relative amounts of poly(ethylene terephthalate) and poly(ethylene terephthalate) copolymers, the residue can include various combinations. For example, the residue can include mixtures of ethylene glycol groups and diethylene glycol groups. The residue can also include mixtures of ethylene glycol groups, diethylene glycol groups, and isophthalic acid groups. The residue derived from poly(ethylene terephthalate) can include the cis isomer of 1,3-cyclohexane dimethanol groups, the cis isomer of 1,4-cyclohexane dimethanol groups, the trans isomer of 1,3-cyclohexane dimethanol groups, the trans isomer of 1,4-cyclohexane dimethanol groups, or combinations thereof. The residue can also be a mixture of ethylene glycol groups, diethylene glycol groups, isophthalic acid groups, cis isomer of cyclohexane dimethanol groups, trans isomer of cyclohexane dimethanol groups, or combinations thereof. The residue derived from poly(ethylene terephthalate) can also include mixtures of ethylene glycol groups, diethylene glycol groups, and cobalt-containing compounds. Such cobalt-containing compound mixture can also contain isophthalic acid groups.

The amount of the ethylene glycol groups, diethylene glycol groups, and isophthalic groups in the polymeric backbone of the modified PBT component can vary. The modified PBT ordinarily contains isophthalic acid groups in an amount that is at least 0.1 mole % and can range from 0 or 0.1 to 10 mole % (0 or 0.07 to 7 wt.%). The modified PBT component ordinarily contains ethylene glycol in an amount that is at least 0.1 mole % and can range from 0.1 to 10 mole % (0.02 to 2 wt.%). In an embodiment, the modified PBT component has an ethylene glycol content that is more than 0.85 wt.%. In another embodiment, compositions can contain ethylene glycol in an amount from 0.1 to 2 wt.%. The modified PBT component can also contain diethylene glycol in an amount from 0.1 to 10 mole % (0.04 to 4 wt.%). The amount of the butanediol groups is generally about 98 mole % and can vary from 95 to 99.8 mole % in some embodiments. The amount of the terephthalic acid groups is generally about 98 mole % and can vary from 90 to 99.9 mole % in some embodiments. Unless otherwise specified, all molar amounts of the isophthalic acid groups and/or terephthalic acid groups are based on the total moles of diacids/diesters in the composition. Unless otherwise specified, all molar amounts of the butanediol, ethylene glycol, and diethylene glycol groups are based on the total moles of diol in the composition. These weight percent measurements are based on the above definitions of terephthalic acid groups, isophthalic acid groups, ethylene glycol groups, and diethylene glycol groups.

The total amount of the poly(ethylene terephthalate) component residue in the modified PBT can vary in amounts from 1.8 to 2.5 wt.%, or from 0.5 to 2 wt.%, or from 1 to 4 wt.%, based on the total weight of the modified PBT. The ethylene glycol, diethylene glycol, and cyclohexane dimethanol groups can be present, individually or in combination, in an amount from 0.1 to 10 mole %, based on 100 mole % of glycol in the molding composition. The isophthalic acid groups can be present in an amount from 0.1 to 10 mole %, based on 100 mole % of diacid/diester in the molding composition.

It has been discovered that when it is desirable to make a poly(butylene terephthalate) copolymer having a melting temperature Tm that is at least 200°C, the total amount of diethylene glycol, ethylene glycol, and isophthalic acid groups should be within a certain range. As such, the total amount of the diethylene glycol, ethylene glycol, and isophthalic acid groups in the modified poly(butylene terephthalate) component can be more than 0 and less than or equal to 23 equivalents, relative to the total of 100 equivalents of diol and 100 equivalents of diacid groups in the modified PBT. The total amount of the isophthalic acid groups, ethylene glycol groups, and diethylene glycol groups can be from 3 to less than or equal to 23 equivalents, relative to the total of 100 equivalents of diol and 100 equivalents of diacid groups in the PET-derived PBT. Alternatively, the total amount of the isophthalic acid groups, ethylene glycol groups, and diethylene glycol groups can be from 3 to less than or equal to 10 equivalents, relative to the total of 100 equivalents of diol and 100 equivalents of diacid groups in the modified PBT. Still further, the total amount of the isophthalic acid groups, ethylene glycol groups, and diethylene glycol groups can be from 10 to less than or equal to 23 equivalents, relative to the total of 100 equivalents of diol and 100 equivalents of diacid groups in the modified PBT. The diethylene glycol, ethylene glycol, and/or isophthalic acid can be added during the process.

The total ethylene glycol groups, isophthalic acid groups, and diethylene glycol groups can vary, depending on the application needs. The composition can have total monomer content selected from the group consisting of ethylene glycol, isophthalic acid groups, and diethylene glycol groups in an amount from more than 0 and less than or equal to 17 equivalents relative to the total of 100 equivalents of diol and 100 equivalents of diacid groups in the modified PBT. Advantageously, such compositions can maintain useful properties, such as heat deflection temperatures that are more than 80°C.

It has also been discovered that the total amount of inorganic residues derived from the poly(ethylene terephthalate) can be present from more than 0 ppm and up to 1000 ppm. Examples of such inorganic residues include those selected from the group consisting of antimony-containing compounds, germanium-containing compounds, titanium-containing compounds, cobalt-containing compounds, tin containing compounds, aluminum, aluminum salts, alkaline earth metal salts, alkali salts, including calcium, magnesium, sodium and potassium salts, phosphorous-containing compounds and anions, sulfur-containing compounds and anions, and combinations thereof. The amounts of inorganic residues can be from 250 to 1000 ppm, and more specifically from 500 to 1000 ppm.

The PET component from which the modified PBT is made can have a variety of forms. Generally, the PET component includes recycle (scrap) PET in flake, powder/chip, film, or pellet form. Before use, the PET is generally processed to remove impurities such as paper, adhesives, polyolefin, e.g., polypropylene, polyvinyl chloride (PVC), nylon, polylactic acid, and other contaminants. Also, the PET component can include PET that is not waste in flake, chip, or pellet form. As such, PET that would ordinarily be deposited in landfills can now be used productively and effectively. The PET component can also include other polyesters and/or polyester copolymers. Examples of such materials include poly(alkylene terephthalates) selected from the group consisting of poly(ethylene terephthalate), poly(cyclohexane dimethanol terephthalate), copolyesters of terephthalate esters with comonomers containing cyclohexanedimethanol and ethylene glycol, copolyesters of terephthalic acid with comonomers containing cyclohexane dimethanol and ethylene glycol, poly(butylene terephthalate), poly(xylylene terephthalate), poly(butylene terephthalate), poly(trimethylene terephthalate), poly(ester naphthalate), and combinations thereof.

Commercial examples of a modified PBT include those available under the trade name VALOX iQ PBT, manufactured by SABIC Innovative Plastics Company. The modified PBT can be derived from the poly(ethylene terephthalate) component by any method that involves depolymerization of the poly(ethylene terephthalate) component and polymerization of the depolymerized poly(ethylene terephthalate) component with 1,4-butanediol to provide the modified PBT. For example, the modified poly(butylene terephthalate) component can be made by a process that involves depolymerizing a poly(ethylene terephthalate) component selected from the group consisting of poly(ethylene terephthalate) and poly(ethylene terephthalate) copolymers, with a 1,4-butanediol component at a temperature from 180°C to 230°C, under agitation, at a pressure that is at least atmospheric pressure in the presence of a catalyst component, at an elevated temperature, under an inert atmosphere, to produce a molten mixture containing a component selected from the group consisting of oligomers containing ethylene terephthalate moieties, oligomers containing ethylene isophthalate moieties, oligomers containing diethylene terephthalate moieties, oligomers containing diethylene isophthalate moieties, oligomers containing butylene terephthalate moieties, oligomers containing butylene isophthalate moieties, covalently bonded oligomeric moieties containing at least two of the foregoing moieties, 1,4-butanediol, ethylene glycol, and combinations thereof; and agitating the molten mixture at sub-atmospheric pressure and increasing the temperature of the molten mixture to an elevated temperature under conditions sufficient to form a modified PBT containing at least one residue derived from the poly(ethylene terephthalate) component.

A higher polyester content, in the present polyester-polycarbonate composition, enables a V0 rating at 1.5 mm, specifically, a polyester content of more than 12 to 30 wt.%, 14 to 28 wt.%, 15 to 25 wt.%, 16 to 26 wt.%, 18 to 24 wt.%, or 20-22 wt.%, based on the total weight of the composition.

As used herein, the term "polycarbonate" means compositions having repeating structural carbonate units of formula (1) 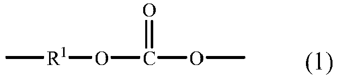 in which at least 60 percent of the total number of R¹ groups contain aromatic moieties and the balance thereof are aliphatic, alicyclic, or aromatic. In an embodiment, each R¹ is a C₆₋₃₀ aromatic group, that is, contains at least one aromatic moiety. R¹ can be derived from an aromatic dihydroxy compound of the formula HO-R¹-OH, in particular of formula (2)

HO-A¹- Y¹-A²-OH (2)

wherein each of A¹ and A² is a monocyclic divalent aromatic group and Y¹ is a single bond or a bridging group having one or more atoms that separate A¹ from A². In an exemplary embodiment, one atom separates A¹ from A². Also included are aromatic dihydroxy compounds of formula (3): 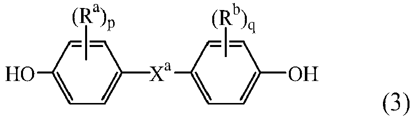 wherein R^{a} and R^{b} each represent a halogen atom or a monovalent hydrocarbon group and may be the same or different; p and q are each independently integers of 0 to 4; and X^{a} is a bridging group connecting the two hydroxy-substituted aromatic groups, where the bridging group and the hydroxy substituent of each C₆ arylene group are disposed ortho, meta, or para (specifically para) to each other on the C₆ arylene group. In an embodiment, the bridging group X^{a} is -C(R^{c})(R^{d})- or -C(=R^{e}) (wherein R^{c} and R^{d} each independently is a hydrogen atom or a monovalent linear or cyclic hydrocarbon group and R^{e} is a divalent hydrocarbon group), a single bond, -O-, -S-, -S(O)-, -S(O)₂-, -C(O)-, or a C₁₋₁₈ organic group. The C₁₋₁₈ organic bridging group can be cyclic or acyclic, aromatic or non-aromatic, and can further comprise heteroatoms such as halogens, oxygen, nitrogen, sulfur, silicon, or phosphorous. The C₁₋₁₈ organic group can be disposed such that the C₆ arylene groups connected thereto are each connected to a common alkylidene carbon or to different carbons of the C₁₋₁₈ organic bridging group. In one embodiment, p and q is each 1, and R^{a} and R^{b} are each a C₁₋₃ alkyl group, specifically methyl, disposed meta to the hydroxy group on each arylene group. In another embodiment, X^{a} is a C₁₋₁₈ alkylene group, a C₃₋₁₈ cycloalkylene group, a fused C₆₋₁₈ cycloalkylene group, or a group of the formula -B¹-W-B²- wherein B¹ and B² are the same or different C₁₋₆ alkylene group and W is a C₃₋₁₂ cycloalkylidene group or a C₆₋₁₆ arylene group.

Other useful aromatic dihydroxy compounds of the formula HO-R¹-OH include compounds of formula (4) 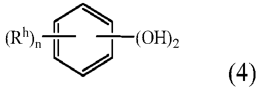 wherein each R^{h} is independently a halogen atom, a C₁₋₁₀ hydrocarbyl such as a C₁₋₁₀ alkyl group, a halogen-substituted C₁₋₁₀ alkyl group, a C₆₋₁₀ aryl group, or a halogen-substituted C₆₋₁₀ aryl group, and n is 0 to 4. The halogen is usually bromine.

Some illustrative examples of specific aromatic dihydroxy compounds include the following: 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3 -bis(4-hydroxyphenyl)-2-butene, 2,2-bis(4-hydroxyphenyl)adamantane, alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like, or combinations comprising at least one of the foregoing dihydroxy compounds.

Specific examples of bisphenol compounds of formula (3) include 1,1-bis(4-hydroxyphenyl) methane, 1,1-bis(4-hydroxyphenyl) ethane, 2,2-bis(4-hydroxyphenyl) propane (hereinafter "bisphenol A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-2-methylphenyl) propane, 1,1-bis(4-hydroxy-t-butylphenyl) propane, 3,3-bis(4-hydroxyphenyl) phthalimidine, 2-phenyl-3,3-bis(4-hydroxyphenyl) phthalimidine (PPPBP), and 1,1-bis(4-hydroxy-3-methylphenyl)cyclohexane (DMBPC). Combinations comprising at least one of the foregoing dihydroxy compounds can also be used. In one specific embodiment, the polycarbonate is a linear homopolymer derived from bisphenol A, in which each of A¹ and A² is p-phenylene and Y¹ is isopropylidene in formula (3).

The polycarbonates can have an intrinsic viscosity, as determined in chloroform at 25°C, of about 0.3 to about 1.5 deciliters per gram (dl/gm), specifically about 0.45 to about 1.0 dl/gm. The polycarbonates can have a weight average molecular weight of about 10,000 to about 200,000 Daltons, specifically about 20,000 to about 100,000 Daltons, as measured by gel permeation chromatography (GPC), using a crosslinked styrenedivinylbenzene column and calibrated to polycarbonate references. GPC samples are prepared at a concentration of about 1 mg per ml, and are eluted at a flow rate of about 1.5 ml per minute. Combinations of polycarbonates of different flow properties can be used to achieve the overall desired flow property.

In one embodiment polycarbonates are based on bisphenol A, in which each of A³ and A⁴ is p-phenylene and Y² is isopropylidene. The weight average molecular weight of the polycarbonate can be about 5,000 to about 100,000 Daltons, or, more specifically about 10,000 to about 65,000 Daltons, or, even more specifically, about 15,000 to about 35,000 Daltons.

To achieve the desired properties, the polycarbonate is present in the composition in an amount from 21.7 to 81.7 wt.%, 20 to 75 wt.%, 30 to 65 wt.%, 40 to 60 wt.%, or 45-55 wt.%, based on the total weight of the composition.

The composition further comprises a polysiloxane-polycarbonate copolymer, also referred to as a polysiloxane-polycarbonate. The thermoplastic compositions can comprise blends of two or more polysiloxane-polycarbonate block copolymers. These block copolymers can be transparent or translucent.

The polydiorganosiloxane (also referred to herein as "polysiloxane") blocks of the copolymer comprise repeating diorganosiloxane units as in formula (10) 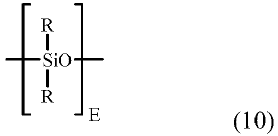 wherein each R is independently the same or different C₁₋₁₃ monovalent organic group. For example, R can be a C₁-C₁₃ alkyl, C₁-C₁₃ alkoxy, C₂-C₁₃ alkenyl group, C₂-C₁₃ alkenyloxy, C₃-C₆ cycloalkyl, C₃-C₆ cycloalkoxy, C₆-C₁₄ aryl, C₆-C₁₀ aryloxy, C₇-C₁₃ arylalkyl, C₇-C₁₃ aralkoxy, C₇-C₁₃ alkylaryl, or C₇-C₁₃ alkylaryloxy. The foregoing groups can be fully or partially halogenated with fluorine, chlorine, bromine, or iodine, or a combination thereof. In an embodiment, where a transparent polysiloxane-polycarbonate is desired, R is unsubstituted by halogen. Combinations of the foregoing R groups can be used in the same copolymer.

The value of E in formula (10) can vary widely depending on the type and relative amount of each component in the thermoplastic composition, the desired properties of the composition, and like considerations. Generally, E has an average value of 2 to about 1,000, specifically about 2 to about 500, more specifically about 5 to about 100. In one embodiment, E has an average value of about 10 to about 75, and in still another embodiment, E has an average value of about 40 to about 60. Where E is of a lower value, e.g., less than about 40, it can be desirable to use a relatively larger amount of the polycarbonate-polysiloxane copolymer. Conversely, where E is of a higher value, e.g., greater than about 40, a relatively lower amount of the polycarbonate-polysiloxane copolymer can be used.

A combination of a first and a second (or more) polycarbonate-polysiloxane copolymers can be used, wherein the average value of E of the first copolymer is less than the average value of E of the second copolymer.

In one embodiment, the polydiorganosiloxane blocks are of formula (11) 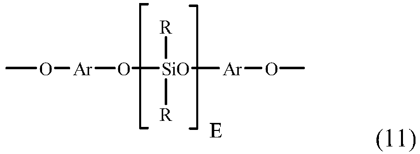 wherein E is as defined above; each R can be the same or different, and is as defined above; and Ar can be the same or different, and is a substituted or unsubstituted C₆-C₃₀ arylene group, wherein the bonds are directly connected to an aromatic moiety. Ar groups in formula (11) can be derived from a C₆-C₃₀ dihydroxyarylene compound, for example a dihydroxyarylene compound of formula (3) or (4) above. Exemplary dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane. Combinations comprising at least one of the foregoing dihydroxy compounds can also be used.

In another embodiment, polydiorganosiloxane blocks are of formula (13) 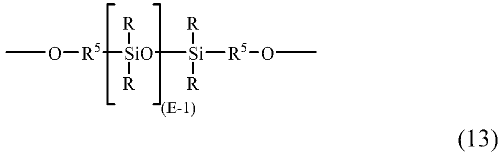 wherein R and E are as described above, and each R⁵ is independently a divalent C₁-C₃₀ organic group, and wherein the polymerized polysiloxane unit is the reaction residue of its corresponding dihydroxy compound. In a specific embodiment, the polydiorganosiloxane blocks are of formula (14): 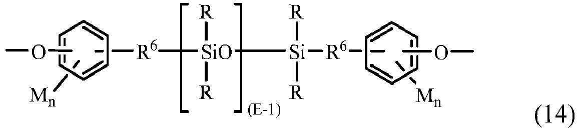 wherein R and E are as defined above. R⁶ in formula (14) is a divalent C₂-C₈ aliphatic group. Each M in formula (14) can be the same or different, and can be a halogen, cyano, nitro, C₁-C₈ alkylthio, C₁-C₈ alkyl, C₁-C₈ alkoxy, C₂-C₈ alkenyl, C₂-C₈ alkenyloxy group, C₃-C₈ cycloalkyl, C₃-C₈ cycloalkoxy, C₆-C₁₀ aryl, C₆-C₁₀ aryloxy, C₇-C₁₂ aralkyl, C₇-C₁₂ aralkoxy, C₇-C₁₂ alkylaryl, or C₇-C₁₂ alkylaryloxy, wherein each n is independently 0, 1, 2, 3, or 4.

In one embodiment, M is bromo or chloro, an alkyl group such as methyl, ethyl, or propyl, an alkoxy group such as methoxy, ethoxy, or propoxy, or an aryl group such as phenyl, chlorophenyl, or tolyl; R² is a dimethylene, trimethylene or tetramethylene group; and R is a C₁₋₈ alkyl, haloalkyl such as trifluoropropyl, cyanoalkyl, or aryl such as phenyl, chlorophenyl or tolyl. In another embodiment, R is methyl, or a combination of methyl and trifluoropropyl, or a combination of methyl and phenyl. In still another embodiment, M is methoxy, n is one, R² is a divalent C₁-C₃ aliphatic group, and R is methyl.

Blocks of formula (14) can be derived from the corresponding dihydroxy polydiorganosiloxane (15) 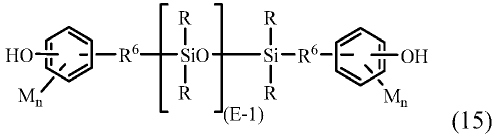 wherein R, E, M, R⁶, and n are as described above. Such dihydroxy polysiloxanes can be made by effecting a platinum-catalyzed addition between a siloxane hydride of formula (16) 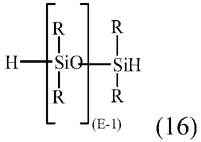 wherein R and E are as previously defined, and an aliphatically unsaturated monohydric phenol. Exemplary aliphatically unsaturated monohydric phenols include eugenol, 2-alkylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol and 2-allyl-4,6-dimethylphenol. Combinations comprising at least one of the foregoing can also be used.

The polyorganosiloxane-polycarbonate can comprise 50 to 99 wt.% of carbonate units and 1 to 50 wt.% siloxane units. Within this range, the polyorganosiloxane-polycarbonate copolymer can comprise 70 to 98 wt.%, more specifically 75 to 97 wt.% of carbonate units and 2 to 30 wt.%, more specifically 3 to 25 wt.% siloxane units.

Polyorganosiloxane-polycarbonates can have a weight average molecular weight of 2,000 to 100,000 Daltons, specifically 5,000 to 50,000 Daltons as measured by gel permeation chromatography using a crosslinked styrene-divinyl benzene column, at a sample concentration of 1 milligram per milliliter, and as calibrated with polycarbonate standards.

The polyorganosiloxane-polycarbonate can have a melt volume flow rate, measured at 300°C/1.2 kg, of 1 to 50 cubic centimeters per 10 minutes (cc/10 min), specifically 2 to 30 cc/10 min. Mixtures of polyorganosiloxane-polycarbonates of different flow properties can be used to achieve the overall desired flow property.

Specifically, the organopolysiloxane-polycarbonate block copolymer can have the following formula: 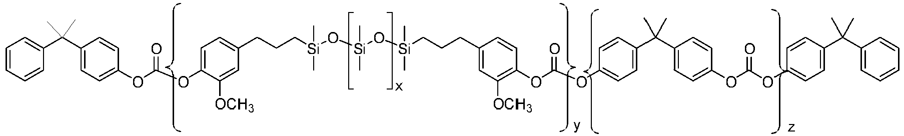 wherein x is 30-50, specifically about 40, y is 10-30, specifically about 20, and z is 450-600, specifically about 500 or 550.

To achieve the desired properties, the polysiloxane-polycarbonate is present in the composition in an amount from 5 to less than 60 wt.%, 5 to 50 wt.%, 5 to 40 wt.%, 5 to 30 wt.%, 10 to 50 wt.%, 20 to 40 wt.%, or 30 to 50 wt.%, based on the total weight of the composition.

The thermoplastic compositions further comprise an organophosphorus flame retardant, which can be monomeric or oligomeric. Representative monomeric aromatic phosphates of the formula (GO)₃P=O, wherein each G is independently an alkyl, cycloalkyl, aryl, alkaryl, or aralkyl group having up to 30 carbon atoms, provided that at least one G is an aromatic group. Two of the G groups may be joined together to provide a cyclic group. Exemplary phosphates include phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, 2-ethylhexyl diphenyl phosphate, and the like. A specific aromatic phosphate is one in which each G is aromatic, for example, triphenyl phosphate, tricresyl phosphate, isopropylated triphenyl phosphate, and the like.

Di- or polyfunctional aromatic phosphorus-containing compounds are also useful, for example, compounds of the formula (17): 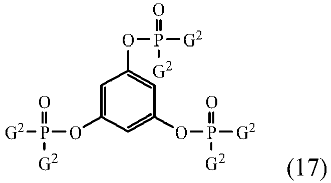 wherein each G¹ is independently a hydrocarbon having 1 to about 30 carbon atoms; each G² is independently a hydrocarbon or hydrocarbonoxy having 1 to about 30 carbon atoms; each X is independently a bromine or chlorine; m is 0 to 4, and n is 1 to about 30.

In an embodiment an oligomeric organophosphorus flame retardant is used. An exemplary oligomeric organophosphorus compound is of the formula (18) 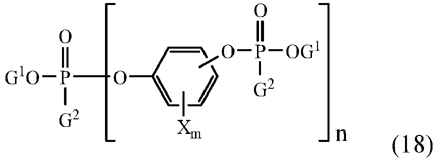 wherein each G¹ is independently a hydrocarbon having 1 to about 30 carbon atoms; each G² is independently a hydrocarbon or hydrocarbonoxy having 1 to about 30 carbon atoms; each X is independently a bromine or chlorine; m is 0 to 4, and n is 1 to about 30. A specific oligomeric organophosphorus flame retardants are inclusive of phosphoric or phosphonic acid esters of formula (19) 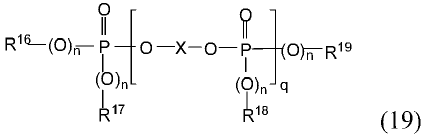 wherein R¹⁶, R¹⁷, R¹⁸ and R¹⁹ each independently CI-8 alkyl, or C5-6 cycloalkyl, C6-20 aryl or C7-12 aralkyl each optionally substituted by alkyl, specifically by C1-4 alkyl and X represents a mono- or poly-nuclear aromatic radical having from 6 to 30 carbon atoms, or a linear or branched aliphatic radical having from 2 to 30 carbon atoms, which can be OH-substituted and can contain up to 8 ether bonds. R¹⁶, R¹⁷, R¹⁸, and R¹⁹ each independently of the others specifically can represent C1-4 alkyl, phenyl, and naphthyl or phenyl C1-4 alkyl. Aromatic groups, in the definition of R¹⁶, R¹⁷, R¹⁸, and R¹⁹, can themselves be substituted by alkyl groups, specifically by C1-C4 alkyl. Specific aryl radicals are cresyl, phenyl, xylenyl, propylphenyl, or butylphenyl. The X in formula (19) specifically represents a mono- or poly-nuclear aromatic radical having from 6 to 30 carbon atoms, which can be derived from diphenols. Each of the substituents n in formula (19), independently of the others, can be 0 or 1; preferably n is equal to 1. q represents values from 0.5 to 30, specifically from 0.8 to 15, particularly from 1 to 5, especially from 1 to 2. Specifically, X can be represented by the following divalent groups (20): 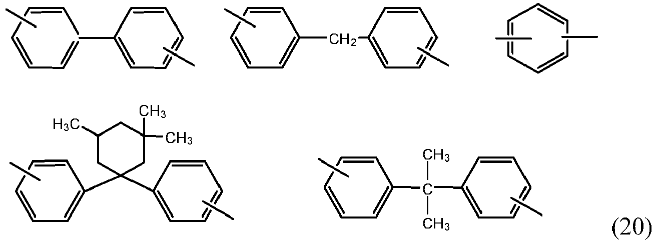 wherein X is derived especially from resorcinol, hydroquinone, bisphenol A, or diphenylphenol. In one embodiment, X is derived from bisphenol A.

A specific class of oligomeric organophosphorus flame retardant compounds are compounds of formula (21): 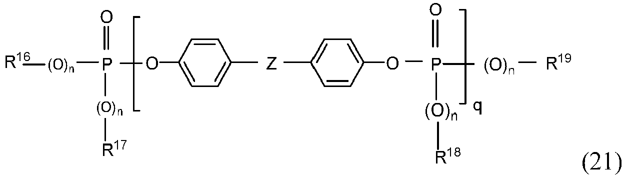 wherein R¹⁶, R¹⁷, R¹⁸, R¹⁹, n, and q are as defined for formula (19) and wherein Z is C1-C7 alkylidene, C1-C7 alkylene, C5-C12 cycloakylidene, -O-, -S-, -SO₂-, or -CO-, specifically isopropylidene. Particular preference is given to an oligomeric organophosphorus flame retardant compound having the formula (22): 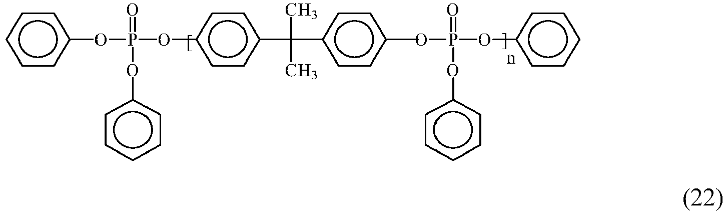 wherein n is from 1 to 5 or 1 to 2.

Oligomeric organophosphorus flame retardants are known (see, for example, EP-A 0 363 608, EP-A 0 640 655) and can be prepared by known methods in an analogous manner (e.g. Ullmanns Enzyklopadie der technischen Chemie, Vol. 18, p. 301 et seq. 1979; Houben-Weyl, Methoden der organischen Chemie, Vol. 12/1, p. 43; Beilstein Vol. 6, p. 177).

The mean n or q values can be determined by determining the composition of the phosphate mixture (molecular weight distribution) by means of a suitable method (gas chromatography (GC), high pressure liquid chromatography (HPLC), gel permeation chromatography (GPC)) and calculating the mean values for q therefrom.

To achieve the desired properties, the oligomeric organophosphorus flame retardant is present in the composition in an amount from 1 to less than 20 wt.%, 2 to 18 wt.%, 4 to 16 wt.%, 6 to 14 wt.%, or 8-12 wt.%, based on the total weight of the composition.

The oligomeric organophosphorus flame retardant is used in combination with a fluorinated polyolefin, a so-called antidripping agent, which reduces the tendency of the material to produce burning drips in case of flame. Fluorinated polyolefins are known and are described, for example, in EP-A 0 640 655. They are marketed, for example, by DuPont under the trademark Teflon® 30N. Fluoropolymers suitable for use as the fluoropolymer component can be fibrillated ("fibrillatable"). "Fibrillation" is a term of art that refers to the treatment of fluoropolymers so as to produce, for example, a "node and fibril," network, or cage-like structure. Suitable fluoropolymers include but are not limited to homopolymers and copolymers that comprise structural units derived from one or more fluorinated alpha-olefin monomers, that is, an alpha-olefin monomer that includes at least one fluorine atom in place of a hydrogen atom. In one embodiment the fluoropolymer comprises structural units derived from two or more fluorinated alpha-olefin, for example tetrafluoroethylene, hexafluoroethylene, and the like. In an embodiment, the fluoropolymer comprises structural units derived from one or more fluorinated alpha-olefin monomers and one or more non-fluorinated monoethylenically unsaturated monomers that are copolymerizable with the fluorinated monomers, for example alpha-monoethylenically unsaturated copolymerizable monomers such as ethylene, propylene, butene, acrylate monomers (e.g., methyl methacrylate and butyl acrylate), vinyl ethers, (e.g., cyclohexyl vinyl ether, ethyl vinyl ether, n-butyl vinyl ether, vinyl esters) and the like. Specific examples of fluoropolymers include poly(tetrafluoroethylene), poly(hexafluoropropylene), poly(vinylidene fluoride), poly(chlorotrifluoroethylene), poly(ethylene-tetrafluoroethylene), fluorinated ethylene-propylene polymer, poly(vinyl fluoride), and poly(ethylene-chlorotrifluoroethylene). Combinations comprising at least one of the foregoing fluoropolymers can also be used.

In an embodiment, the fluoropolymer is at least partially encapsulated by an encapsulating polymer that can be the same or different as the matrix polymer (hereinafter referred to as an "encapsulated polymer"). Without being bound by theory, it is believed that encapsulation can aid in the distribution of the fluoropolymer within the matrix, and/or compatibilize the fluoropolymer with the matrix. Specific encapsulating polymers include polystyrene, copolymers of polystyrene, poly(alpha-methylstyrene), poly(alpha-ethylstyrene), poly(alpha-propylstyrene), poly(alpha-butylstyrene), poly(p-methylstyrene), polyacrylonitrile, poly(methacrylonitrile), poly(methyl acrylate), poly(ethyl acrylate), poly(propyl acrylate), and poly(butyl acrylate), poly(methyl methacrylate), poly(ethyl methacrylate), poly(propyl methacrylate), poly(butyl methacrylate); polybutadiene, copolymers of polybutadiene with propylene, poly(vinyl acetate), poly(vinyl chloride), poly(vinylidene chloride), poly(vinylidene fluoride), poly(vinyl alcohols), acrylonitrile-butadiene copolymer rubber, acrylonitrile-butadiene-styrene (ABS), poly(C4-8 alkyl acrylate) rubbers, styrene-butadiene rubbers (SBR), EPDM rubbers, silicon rubber and combinations comprising at least one of the foregoing encapsulating polymers. In another embodiment, the encapsulating polymer comprises SAN, ABS copolymers, alpha-(C1-3)alkyl-styrene-acrylonitrile copolymers, alpha-methylstyrene-acrylonitrile (AMSAN) copolymers, SBR, and combinations comprising at least one of the foregoing. In yet another embodiment the encapsulating polymer is SAN or AMSAN.

In a specific embodiment the encapsulated fluoropolymer is poly(tetrafluoroethylene) (PTFE) encapsulated by a styrene-acrylonitrile copolymer (SAN). Small amounts of other fluoropolymers can be used, for example those comprising units derived from fluorinated monomers such as 3,3,3-trifluoropropene, 3,3,3,4,4-pentafluoro-1-butene, hexafluoropropylene, vinyl fluoride; vinylidene fluoride, 1,2-difluoroethylene, and the like, or a mixture comprising at least one of the foregoing monomers. Suitable amounts amount of encapsulating polymer can be determined by one of ordinary skill in the art without undue experimentation, using the guidance provided below. In one embodiment, the encapsulated fluoropolymer comprises about 10 to about 90 wt.% (wt.%) fluoropolymer and about 90 to about 10 wt.% of the encapsulating polymer, based on the total weight of the encapsulated fluoropolymer. Alternatively, the encapsulated fluoropolymer comprises about 20 to about 80 wt.%, more specifically about 40 to about 60 wt.% fluoropolymer, and about 80 to about 20 wt.%, specifically about 60 about 40 wt.% encapsulating polymer, based on the total weight of the encapsulated polymer.

A useful encapsulated fluoropolymer is PTFE encapsulated in styrene-acrylonitrile (SAN), also known as TSAN. The SAN can comprise, for example, about 75 wt.% styrene and about 25 wt.% acrylonitrile based on the total weight of the copolymer. An exemplary TSAN comprises about 50 wt.% PTFE and about 50 wt.% SAN, based on the total weight of the encapsulated fluoropolymer.

The polyester-polycarbonate compositions can comprise from 0.02 to 5 wt.% of the fluorinated polyolefin, or from 0.04 to 3 wt.%, specifically from 0.1 to 2 wt.%, more specifically from 0.2 to 1 wt.%, based on the total weight of the composition. When an encapsulated fluorinated polyolefin such as TSAN is used, the foregoing amounts refer to the weight of the fluorinated polyolefin alone, rather than the total weight of the encapsulated polyolefin.

The thermoplastic composition can optionally further comprise other types of impact modifier (i.e., other than an organopolysiloxanes-polycarbonate block copolymer) in an amount from 0.25 to 10 wt.%, based on the total weight of the composition. In other embodiments, such other impact modifiers are present in an amount from 0.5 to 8 wt.%, specifically from 1.0 to 6 wt.%, still more specifically 0 to 1.0 wt.%, based on the total weight of the composition.

Such other impact modifiers are typically high molecular weight elastomeric materials derived from olefins, monovinyl aromatic monomers, acrylic and methacrylic acids and their ester derivatives, as well as conjugated dienes. The polymers formed from conjugated dienes can be fully or partially hydrogenated. The elastomeric materials can be in the form of homopolymers or copolymers, including random, block, radial block, graft, and core-shell copolymers. Combinations of such other impact modifiers can be used.

An example of specific type of other impact modifier is an elastomer-modified graft copolymer comprising (i) an elastomeric (i.e., rubbery) polymer substrate having a Tg less than about 10°C, more specifically less than about -10°C, or more specifically about -40° to -80°C, and (ii) a rigid polymeric superstrate grafted to the elastomeric polymer substrate. Materials suitable for use as the elastomeric phase include, for example, conjugated diene rubbers, for example polybutadiene and polyisoprene; copolymers of a conjugated diene with less than about 50 wt.% of a copolymerizable monomer, for example a monovinylic compound such as styrene, acrylonitrile, n-butyl acrylate, or ethyl acrylate; olefin rubbers such as ethylene propylene copolymers (EPR) or ethylene-propylene-diene monomer rubbers (EPDM); ethylene-vinyl acetate rubbers; silicone rubbers; elastomeric C₁₋₈ alkyl (meth)acrylates; elastomeric copolymers of C₁₋₈ alkyl (meth)acrylates with butadiene and/or styrene; or combinations comprising at least one of the foregoing elastomers. Materials suitable for use as the rigid phase include, for example, monovinyl aromatic monomers such as styrene and alpha-methyl styrene, and monovinylic monomers such as acrylonitrile, acrylic acid, methacrylic acid, and the C₁-C₆ esters of acrylic acid and methacrylic acid, specifically methyl methacrylate.

Specific exemplary elastomer-modified graft copolymers include those formed from styrene-butadiene-styrene (SBS), styrene-butadiene rubber (SBR), styrene-ethylene-butadiene-styrene (SEBS), ABS (acrylonitrile-butadiene-styrene), acrylonitrile-ethylene-propylene-diene-styrene (AES), styrene-isoprene-styrene (SIS), methyl methacrylate-butadiene-styrene (MBS), and styrene-acrylonitrile (SAN).

Other impact modifiers include an epoxy-functional copolymer comprising units derived from a C2-20 olefin and units derived from a glycidyl (meth)acrylate. Exemplary olefins include ethylene, propylene, butylene, and the like. The olefin units can be present in the copolymer in the form of blocks, e.g., as polyethylene, polypropylene, polybutylene, and the like blocks. It is also possible to use mixtures of olefins, i.e., blocks containing a mixture of ethylene and propylene units, or blocks of polyethylene together with blocks of polypropylene.

In addition to glycidyl (meth)acrylate units, the copolymers can further comprise additional units, for example C1-4 alkyl (meth)acrylate units. In one embodiment, the impact modifier is terpolymeric, comprising polyethylene blocks, methyl acrylate blocks, and glycidyl methacrylate blocks. Specific impact modifiers are a co- or ter-polymer including units of ethylene, glycidyl methacrylate (GMA), and methyl acrylate, available under the trade name LOTADER® polymer, sold by Arkema. The terpolymers comprise, based on the total weight of the copolymer, 0.3 to 12 wt.% of glycidyl methacrylate units, more specifically 0.4 to 11 wt.% of glycidyl methacrylate units, even more specifically 0.5 to 10 wt.% of glycidyl methacrylate units. Suitable impact modifiers include the ethylene-methyl acrylate-glycidyl methacrylate terpolymer comprising 8 wt.% glycidyl methacrylate units available under the trade name LOTADER AX8900.

Specifically, such other impact modifiers include methyl meth(acrylate)-butadiene-styrene, acrylonitrile-butadiene-styrene, styrene-ethylene/butylene-styrene, ethylene-glycidyl methacrylate-methyl acrylate, ethylene-glycidyl (meth)acrylate-methyl acrylate impact modifier, and combinations thereof.

In an embodiment, the composition comprises less than 2 wt.% of a graft copolymer impact modifier and less than 1.5 wt.% of an ethylene-glycidyl (meth)acrylate-methyl acrylate impact modifier. In another embodiment, the composition comprises from 0 to 2 wt.% of a graft copolymer impact modifier and from 0 to 1.5 wt.% of an ethylene-glycidyl (meth)acrylate-methyl acrylate impact modifier.

Other polymers that can be included in the composition, in relatively minor amounts, include polyamides, polyolefins, poly(arylene ether)s, poly(arylene sulfide)s, polyetherimides, polyvinyl chlorides, polyvinyl chloride copolymers, silicones, silicone copolymers, C1-6 alkyl (meth)acrylate polymers (such as poly(methyl methacrylate)), and C1-6 alkyl (meth)acrylate copolymers. Such polymers are generally present in amounts of 0 to 10 wt.% of the total thermoplastic composition.

The compositions can include various additives ordinarily incorporated into polymer compositions of this type, with the proviso that the additives are selected so as to not significantly adversely affect the desired properties of the thermoplastic composition. Exemplary additives include fillers, catalysts (for example, to facilitate reaction between an impact modifier and the polyester), antioxidants, thermal stabilizers, light stabilizers, ultraviolet light (UV) absorbing additives, quenchers, plasticizers, lubricants, mold release agents, antistatic agents, visual effect additives such as dyes, pigments, and light effect additives, flame resistances, anti-drip agents, and radiation stabilizers. Combinations of additives can be used. The foregoing additives (except any fillers) are generally present in an amount from 0.005 to 20 wt.%, specifically 0.01 to 10 wt.%, based on the total weight of the composition.

Particulate fillers include, for example, alumina, amorphous silica, anhydrous alumino silicates, mica, wollastonite, barium sulfate, zinc sulfide, clays, talc, and metal oxides such as titanium dioxide, carbon nanotubes, vapor grown carbon nanofibers, tungsten metal, barites, calcium carbonate, milled glass, flaked glass, ground quartz, silica, zeolites, and solid or hollow glass beads or spheres, and fibrillated tetrafluoroethylene. Reinforcing fillers can also be present. Suitable reinforcing fillers include fibers comprising glass, ceramic, or carbon, specifically glass that is relatively soda free, more specifically fibrous glass filaments comprising lime-alumino-borosilicate glass, which are also known as "E" glass. The fibers can have diameters of 6 to 30 micrometers. The fillers can be treated with a variety of coupling agents to improve adhesion to the polymer matrix, for example with amino-, epoxy-, amido- or mercapto-functionalized silanes, as well as with organometallic coupling agents, for example, titanium or zirconium based compounds. Particulate fillers, if present, are used in amounts effective to provide the desired effect (e.g., titanium dioxide in an amount effective to provide ultraviolet light resistance), for example, 0.1 to 20 wt.% of the total thermoplastic composition. Fibrous fillers, if present, are used in amounts effective to provide the desired effect (e.g., strength), without significantly adversely affecting other desired properties of the composition. In one embodiment, fillers are present in an amount of 0 to 10 wt.% of the total thermoplastic composition, specifically less than 5 wt.%, based on weight of the total thermoplastic composition.

To prepare the thermoplastic composition, the components can be mixed by any known methods. Typically, there are two distinct mixing steps: a premixing step and a melt mixing ("melt blending") step. In the premixing step, the dry ingredients are mixed together. The premixing is typically performed using a tumbler mixer or ribbon blender. However, if desired, the premix may be manufactured using a high shear mixer such as a Henschel mixer or similar high intensity device. The premixing is typically followed by melt mixing in which the premix is melted and mixed again as a melt. Alternatively, the premixing may be omitted, and raw materials may be added directly into the feed section of a melt mixing device, preferably via multiple feeding systems. In melt mixing, the ingredients are typically melt kneaded in a single screw or twin screw extruder, a Banbury mixer, a two roll mill, or similar device. The examples are extruded using a twin screw type extruder, where the mean residence time of the material is from about 20 seconds to about 30 seconds, and where the temperature of the different extruder zones is from about 230°C to about 290°C.

In a specific embodiment, the thermoplastic compositions are prepared by blending the components of the composition by placing into an extrusion compounder to produce molding pellets. The components are dispersed in a matrix in the process. In another procedure, the components and reinforcing filler are mixed by dry blending, and then fluxed on a mill and comminuted, or extruded and chopped. The composition and any optional components can also be mixed and directly molded, e.g., by injection or transfer molding techniques. Preferably, all of the components are freed from as much water as possible. In addition, compounding is carried out to ensure that the residence time in the machine is short; the temperature is carefully controlled; the friction heat is utilized; and an intimate blend between the components is obtained.

The components can be pre-compounded, pelletized, and then molded. Pre-compounding can be carried out in conventional equipment. For example, after pre-drying the composition (e.g., for four hours at 120°C), a single screw extruder can be fed with a dry blend of the ingredients, the screw employed having a long transition section to ensure proper melting. Alternatively, a twin screw extruder with intermeshing co-rotating screws can be fed with resin and additives at the feed port and reinforcing additives (and other additives) can be fed downstream. In either case, a generally suitable melt temperature will be 230°C to 300°C. The pre-compounded composition can be extruded and cut up into molding compounds such as conventional granules, pellets, and the like by standard techniques. The composition can then be molded in any equipment conventionally used for thermoplastic compositions, such as a Newbury or van Dorn type injection molding machine with conventional cylinder temperatures, at 230°C to 280°C, and conventional mold temperatures at 55°C to 95°C.

The inventors have found that a useful balance of properties can be obtained using a blend of polymers, including a polyester, a polycarbonate, and an organopolysiloxanes-polycarbonate block copolymer containing both aromatic polycarbonate units and polysiloxane units. Such blends have excellent impact resistance and chemical resistance, together with excellent melt flow, heat resistance and flame resistance.

For example, the compositions include embodiments that can have one or more of the following properties: a melt flow (MVR) of 25 to 45 cc per 10 minutes at 265°C and a shear load of 5 kg according to ASTM D1238; a Vicat softening temperature of greater than 100°C, measured in accordance with ASTM 1525 at 50 Newtons and a heating rate of 120°C/hour; and/or a notched Izod impact strength of greater than 400 J/m, measured at 23°C in accordance with ASTM D256 on a sample bar molded from the composition and having a thickness of 3.2 mm, a UL 94 flammability rating of V0 measured on a molded sample having a thickness of 1.5 mm. Compositions having any one or more of these properties can have limited or no halogen-based flame retardants added, and have, for example, less than 1000 ppm of chlorine and bromine.

In one embodiment, the composition has both a notched Izod impact strength of greater than 400 J/m, measured at 23°C in accordance with ASTM D256 on a sample bar molded from the composition and having a thickness of 3.2 and a UL 94 flammability rating of V0 measured on a molded sample having a thickness of 1.5 mm.

In another embodiment, the composition has a characteristic melt flow (MVR) of 25 to 45 per 10 minutes at 265°C and a shear load of 5 kg measured according to ASTM D1238, a Vicat softening temperature of greater than 100°C, measured in accordance with ASTM 1525 at 50 Newtons and a heating rate of 120°C/hour, a notched Izod impact strength of greater than 400 J/m, measured at 23°C in accordance with ASTM D256 on a sample bar molded from the composition and having a thickness of 3.2, and a UL 94 flammability rating of V0 measured on a molded sample having a thickness of 1.5 mm. The compositions can achieve such a balance of properties, if desired, using less than 1000 ppm, specifically less than 500 ppm, more specifically less than 100 ppm, most specifically essentially no ppm, by weight of bromine and/or chlorine-containing compound.

In particular, a thermoplastic composition comprises, based on the total weight of the composition:
from 20 to 25 wt.% of a poly(ethylene terephthalate), a poly(butylene terephthalate), or a combination thereof;
from 25 to 73.5 wt.% of a bisphenol A polycarbonate;
from 5 to 30 wt.% of an organopolysiloxane-polycarbonate block copolymer of the formula 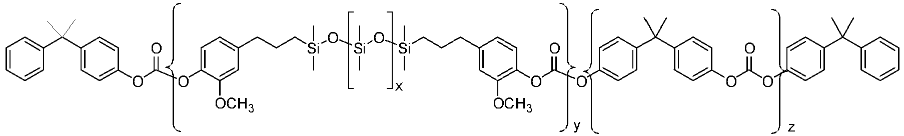 wherein x= 30-50, y = 10-30, and z = 450-600,
from 1 to 20 % of an oligomeric organophosphorus flame retardant of the formula 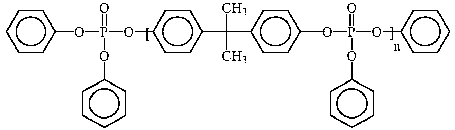 wherein n is from 1 to 5,
from 0.04 to 10% of a styrene-acrylonitrile encapsulated polytetrafluoroethylene,
optionally, from 0.25 to 10 wt.% of an impact modifier selected from the group consisting of elastomer-based graft copolymers and elastomer-based graft copolymers,
from 0.1 to 2 wt.% of an antioxidant,
from 0.1 to 2 wt.% of a quencher, and
from 0.1 to 2 wt.% of a UV stabilizer;
wherein the composition has:
less than 1000 ppm of a bromine- and/or chlorine-containing compound,
a Vicat softening temperature of greater than 100°C, measured in accordance with ASTM 1525 at 50 Newtons and a heating rate of 120°C/hour,
a notched Izod impact strength of greater than 400 J/m, measured at 23°C in accordance with ASTM D256 on a sample bar molded from the composition and having a thickness of 3.2, and
a UL-94 flammability rating of V0 measured on a molded sample having a thickness of 1.5 mm.

The compositions can be shaped into an article by various techniques known in the art such as injection molding, extrusion, injection blow molding, gas assist molding. The compositions are thus useful in the manufacture of electrical or electronic parts.

Advantageously, our invention now provides a polyester-polycarbonate composition with good flame resistance properties that exhibits at least two of improved impact resistance, heat resistance, and chemical resistance, even when such compositions contain higher polyester content than that in the compositions described in the prior art.

Our invention also provides a polymer composition that can use a post-consumer recycled polyester polymer as its polyester component, such that the composition can at least substantially maintain important properties such as flame resistance, chemical resistance, heat resistance, as well as other physical properties.

This invention is further illustrated by the following Examples, which are not intended to limit the claims.

### EXAMPLES

### Materials

The materials used in the Examples are shown in Table 1.

**Table 1.**

| Acronym/Name | Chemical Name (Use) | Trade Name, Source | CAS # |
|---|---|---|---|
| PC | Polycarbonate derived from bisphenol A | Sabic Innovative Plastics | 111211-39-3 |
| PBT | Poly(butylene terephthalate) | PBT-315, Sabic Innovative Plastics | 30965-26-5 |
| PET | Poly(ethylene terephthalate) | | 25038-59-9 |
| R-PBT | Poly(butylene terephthalate) derived from recycled poly(ethylene terephthalate) | Sabic Innovative Plastics | 24968-12-5 |
| R-PET | Poly(ethylene terephthalate) derived from recycled poly(ethylene terephthalate) | | 25038-59-9 |
| EXL-PC | 20% PC-Siloxane copolymer with PCP endcapping | Sabic Innovative Plastics | 202483-49-6 |
| IM-1 | Methyl methacrylate-butadiene-styrene copolymer (MBS impact modifier) | EXL2650A | 25053-09-2 |
| IM-2 | METABLEN S-2001 (impact modifier) | F8210 | 143106-82-5 |
| IM-3 | E-GMA-MA (impact modifier) | LOTADER | 51541-08-3 |
| IM-4 | High MW Styrene-ethylene/butylene-styrene (SEBS impact modifier) | | 66070-58-4 |
| BPA-DP | BPA Diphosphate | | 5945-33-5 |
| TSAN | Poly(tetrafluoroethylene): styrene-acrylonitrile 50:50 | F449 | 9002-84-0 |
| MZP | Zn(H₂PO₄)₂ + 3% silica (Quenching agent) | F2811 | 13598-37-3 |
| AO | Tetrakis(methylene(3,5di-tert-butyl-4-hydroxy-hydrocinnamate)methane (Antioxidant) | Antioxidant 1010 | 6683-19-8 |
| PS | (Phosphate stabilizer) | HP-10 | |
| UVS | (UV stabilizer) | CYASORB UV 5411 | 3147-75-9 |

EXL-P has the formula: 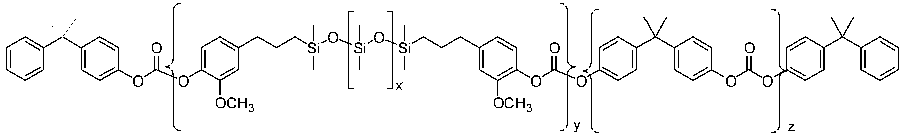 wherein x= about 40, y = about 20, and z = about 500-550. BPA-DP has the formula: 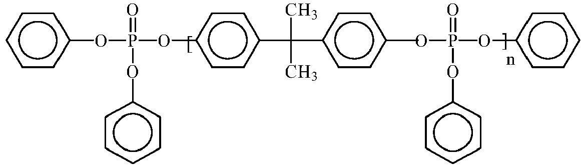 wherein n is equal to 1 to about 5.

### Techniques and Procedures

Composition Processing: All components (PC, PBT, EXL-PC, TSAN, MZP, phosphate stabilizer HP-10, and UV stabilizer were dry-blended. The resulting blend was fed to a hopper of 37 mm Toshiba TEM-37BS Twin Screw Extruder with a vacuum vented mixing screw, and set at a cylinder temperature of 255°C and 150 to 300 rpm screw speed. The extruder has 8 independent feeders for different raw materials and can be operated at a maximum rate of 200 lbs/hr. The organic phosphorus flame retardant (BPA-DP) was added to the middle part of the extruder from a liquid feed pump thereof. The composition was melt-kneaded and extruded. The extrudate was cooled through a water bath prior to pelletizing.

Sample preparation and testing: After drying the obtained pellets at 80°C for 6 hours, bar specimens measuring 127 mm x 12 mm x 1.6 mm and other specimens in accordance with ASTM standards were prepared from the pellets using a 150 T injection molding machine at a melt temperature 250°C and a mold temperature of 90°C. The samples were tested for various properties using the standards shown in Table 2.

**Table 2.**

| Property | Standard | Conditions | Specimen Type | Units |
|---|---|---|---|---|
| MVR | ASTM D1238 | 265°C/5 kg | Granule | Cc/10 mins |
| Notched Izod | ASTM D-256 | 3.2 mm | Bar - 63.5 x 12.7 x 3.2 mm | J/m |
| HDT (1) | ASTM 648 | 1.82 MPa/3.2 mm | Bar - 127 x 12.7 x 3.2 mm | °C |
| HDT (2) | ASTM 648 | 0.45 MPa / 3.2 mm | Bar - 127 x 12.7 x 3.2 mm | °C |
| Vicat* | ASTM 1525 | 50 N -120°C/hour | Bar - 127 x 12.7 x 3.2 mm | °C |
| UL | UL 94 | 1.5 mm thickness | Bar - 127 x 12.7 x 1.5 mm | V0, V1, V2 |

In the reference examples R1 to R4 Vicat was tested using ISO testing protocols.

### Examples 1-12 and Comparative Examples C1-C5

Compositions having the formulations (wt.%) shown in Table 3 were prepared as described above, except that the compositions containing PET were processed 20°C higher than the compositions containing PBT, including both extruding and molding operations for the preparation of the test specimens. In addition to the components shown, each composition was formulated with 0.15 wt.% MZP, 0.8 wt.% TSAN, 0.15 wt.% AO, and 0.27 wt.% UVS. Results are also shown in Table 3.

**Table 3.**

| Component | E1 | E2 | E3 | E4 | E5 | E6 | E7 | E8 | E9 | E10 | E11 | C1 | C2 | C3 | C4 | C5 | C6 | C7 |
|---|---|---|---|---|---|---|---|---|---|---|---|---|---|---|---|---|---|---|
| PC | 56.1 | 45.1 | 45.1 | 50.9 | 50.9 | 50.9 | 50.9 | 45.1 | 50.0 | 45.1 | 50.9 | 76.1 | 70.2 | 70.2 | 70.2 | 58.9 | 64.63 | 58.9 |
| PBT | 15 | - | 20 | 20 | 20 | 20 | 20 | - | - | - | - | 15 | 15 | 15 | 15 | 15 | 15 | 15 |
| R-PBT | - | - | - | - | - | - | - | - | - | 20 | 20 | - | - | - | - | - | | |
| PET | - | 20 | - | - | - | - | - | - | - | - | - | - | - | - | - | - | | |
| R-PET | - | - | - | - | - | - | - | 20 | 20 | - | - | - | - | - | - | - | | |
| EXL-PC | 20 | 25 | 25 | 18 | 18 | 18 | 18 | 25 | 18 | 25 | 18 | - | - | - | - | - | | |
| METABLEN | - | - | - | - | 1 | - | - | - | - | - | - | - | - | 4 | - | - | | |
| MBS | - | - | - | 1 | - | - | - | - | - | - | - | - | 4 | - | - | 10 | 7 | 10 |
| LOTADER | - | - | - | - | - | 1 | - | - | - | - | - | - | - | - | 4 | - | | |
| SEBS | - | - | - | - | - | - | 1 | - | 1 | - | 1 | - | - | - | - | - | | |
| BPA-DP | 7.5 | 8.5 | 8.5 | 8.75 | 8.75 | 8.75 | 8.75 | 8.5 | 8.5 | 8.75 | 8.75 | 7.5 | 10 | 10 | 10 | 15 | 12 | 15 |

| Properties | | | | | | | | | | | | | | | | | | |
|---|---|---|---|---|---|---|---|---|---|---|---|---|---|---|---|---|---|---|
| MVR 265°C/5 Kg (cc/10 mins) | 25 | 45 | 27 | 29 | 30 | 27 | 31 | 42 | 43 | 27 | 28 | 28 | 30 | 37 | 25 | 37 | 43 | 24 |
| INI, 23° C (J/m) | 644 | 589 | 551 | 540 | 556 | 655 | 591 | 568 | 560 | 551 | 694 | 66.4 | 91 | 109 | 100 | 393 | 74 | 924 |
| HDT, 1.82 MPa (°C) | 85 | 86 | 80.5 | 81 | 80 | 80 | 81 | 86 | 84 | 78 | 77 | 92 | 80 | 81 | 79 | 67 | 68 | 66 |
| HDT, 0.45 MPa (°C) | 96.5 | 99 | 93.4 | 93 | 93 | 93 | 93 | 99 | 98.6 | 89 | 89 | 101 | 92 | 91 | 90 | 77 | 79 | 77 |
| Vicat (°C) | 108 | 112 | 105 | 105 | 105 | 105 | 104 | 109 | 107.6 | 101 | 100 | 112 | 103 | 103 | 103 | 87 | 89 | 87 |
| UL 94 | V0 | V0 | V0 | V0 | V0 | V0 | V0 | V0 | V0 | V0 | V0 | V0 | V0 | V0 | V0 | V0 | V0 | No rating |

It can be seen from the data in Table 3 that when an organic organophosphorus (BPA-DP) is present in the composition of C1 with no impact modifier, the composition achieved a flammability rating of V0, but the impact resistance was degraded compared to Examples 1-11. In Comparative Examples C2-C5 impact modifiers are incorporated to improve the impact resistance, but the compositions did not attain the desired balance of properties (a combination of a V0 flammability rating, good impact resistance (greater than 400 J/m, specifically greater than 500 J/m) and high Vicat softening temperature (greater than 100°C) at the same time. In particular, C5 shows that in order to maintain both good impact strength and a V0 rating, too much flame retardant and impact modifier must be added into the formulation, leading to the severe impairment made to the heat distortion temperature and Vicat softening temperature.

In contrast, when an organopolysiloxane-polycarbonate block copolymer is used to completely replace standard impact modifiers (E1-E3), an excellent balance of impact resistance, flame resistance, and heat resistance can achieved with both PET and PBT. Moreover, Vicat softening temperature and heat distortion temperature in E1 are remarkable improved over a composition containing a standard impact modifier alone (C5).

Examples E4-E7 further show that use of an organopolysiloxane-polycarbonate block copolymer in combination with a standard impact modifier also results in an excellent balance of impact resistance, flame resistance, and heat resistance. Finally, use of a post-consumer recycled PET (E8-E9) or PBT derived from PET (E10-E11) resulted in no change in flame resistance, almost no change in impact strength, and only a small change in heat resistance.

### Reference Examples R1-R4

The above results are consistent with the data shown in U.S. Patent No. 7,067,567, Table 1, which is reproduced in Table 5 for convenience.

**Table 4.**

| Component | R1 | R2 | R3 | R4 |
|---|---|---|---|---|
| Aromatic polycarbonate, Mw = 25, 500 g/mol | 72 | 67.0 | 62.0 | 57.0 |
| PET, I.V. = less than 0.8 dl/g | 5 | 10 | 15 | 20 |
| METABLEN | 9 | 9 | 9 | 9 |
| BPA-DP | 12.5 | 12.5 | 12.5 | 12.5 |
| TSAN | 1.0 | 1.0 | 1.0 | 1.0 |
| Pentaerythritol tetrastearate | 0.4 | 0.4 | 0.4 | 0.4 |
| Phosphate stabilizer | 0.1 | 0.1 | 0.1 | 0.1 |

| Properties | | | | |
|---|---|---|---|---|
| Impact, Notched Izod, 23°C (KJ/m²) | 57 | 43 | 15 | 8 |
| Vicat, 50 N, 120°C/h (following ISO 306) | 102 | 100 | 99 | 98 |
| UL rating | V0 | V0 | V1 | V1 |

As can be seen from R1-R4, the combination of BPA-DP and a rubber-based impact modifier only produces higher impact resistance when in compositions with less than 12 wt.% PET. Thus, in R1 (5 wt.% PET) and R2 (10 wt % PET) a combination of the high flame resistance (V0-rating at 1.5 mm), high impact resistance (>20 KJ/m2) and high Vicat softening temperature (about 100°C) are achieved. However, for R3 (15 wt.% PET) and R4 (20 wt.% PET), the desired combination of flame resistance, high impact strength, and high Vicat softening temperature cannot be achieved. Considering the fact that PET is less flammable than or at least the same as PBT, it is likely that the same results would be achieved in compositions containing PBT in place of PET.

## Claims

1. A thermoplastic composition comprising, based on the total weight of the composition:
(a) from more than 12 to 30 wt.% of a polyester;
(b) from 21.7 to 81.7 wt.% of a polycarbonate;
(c) from 5 to less than 60 wt.% of an organopolysiloxane-polycarbonate block copolymer comprising from 10 to 50 wt.% of polydiorganosiloxane units;
(d) from 1 to 20 wt.% of an organophosphorus flame retardant;
(e) from 0.02 to 5 wt.% of a fluorinated polyolefin;
(f) free of an impact modifier selected from the group consisting of elastomer-based graft copolymers and elastomer-based block copolymers; and
(g) from 0.1 to 5 wt.% of an additive composition comprising an antioxidant, a quencher, an ultraviolet light stabilizer, or a combination thereof,
wherein the composition has:
less than 1000 ppm by weight of bromine and/or chlorine-containing compound,
a flow of 25 to 45 per 10 minutes at 265°C and a shear load of 5 kg as measured in accordance with ASTM D1238,
a Vicat softening temperature of greater than 100°C, measured in accordance with ASTM 1525 at 50 Newtons and a heating rate of 120°C/hour,
a notched Izod impact strength of greater than or equal to 400 J/m, measured at 23°C in accordance with ASTM D256 on a sample bar molded from the composition and having a thickness of 3.2, and
a UL 94 flammability rating of V0 measured on a molded sample having a thickness of 1.5 mm.

2. The composition of claim 1, wherein the polyester is present in an amount from 15 to 25 wt.%, and the organopolysiloxane-polycarbonate block copolymer is present in an amount from 5 to 30 wt.%.

3. The composition of claim 1 or 2, wherein the polyester is poly(ethylene terephthalate), poly(butylene terephthalate), or a combination thereof.

4. The composition of any of claims 1-3, wherein the organopolysiloxane-polycarbonate block copolymer comprises 50 to 99 wt.% of carbonate units and 1 to 50 wt.% siloxane units and has a weight average molecular weight of 2,000 to 100,000 Daltons as measured by gel permeation chromatography using a cross-linked styrene-divinyl benzene column at a sample concentration of 1 milligram per milliliter and calibrated with polycarbonate standards, wherein the organopolysiloxane-polycarbonate block copolymer has polydiorganosiloxane blocks of the following formula: 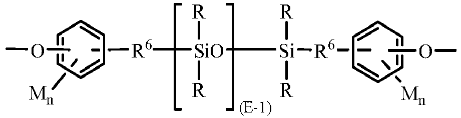 wherein each R is independently a same or different C₁₋₁₃ monovalent organic group; E has an average value of 5 to 100; R⁶ is a divalent C₂-C₈ aliphatic group; each M is a same or different group that is a halogen, cyano, nitro, C₁-C₈ alkylthio, C₁-C₈ alkyl, C₁-C₈ alkoxy, C₂-C₈ alkenyl, C₂-C₈ alkenyloxy group, C₃-C₈ cycloalkyl, C₃-C₈ cycloalkoxy, C₆-C₁₀ aryl, C₆-C₁₀ aryloxy, C₇-C₁₂ aralkyl, C₇-C₁₂ aralkoxy, C₇-C₁₂ alkylaryl, or C₇-C₁₂ alkylaryloxy; and each n is independently 0, 1, 2, 3, or 4.

5. The composition of any of claims 1-4, wherein the organophosphorus flame retardant is oligomeric.

6. The composition of any of claims 1-5, wherein the fluorinated polyolefin is a styrene-acrylonitrile encapsulated polytetrafluoroethylene.

7. The composition of any of claims 1-6, wherein the impact modifier is present in an amount from 0.25 to 10 wt.% and is a methyl meth(acrylate)-butadiene-styrene, acrylonitrile-butadiene-styrene, styrene-ethylene/butylene-styrene, ethylene-glycidyl methacrylate-methyl acrylate, or a combination thereof.

8. The composition of claim 1, comprising, based on the total weight of the composition:
(a) from 20 to 25 wt.% of a poly(ethylene terephthalate), a polybutylene terephthalate), or a combination thereof;
(b) from 25 to 73.5 wt.% of a bisphenol A polycarbonate;
(c) from 5 to 30 wt.% of an organopolysiloxane-polycarbonate block copolymer comprising 50 to 99 wt.% of carbonate units and 1 to 50 wt.% siloxane units and having a weight average molecular weight of 2,000 to 100,000 Daltons as measured by gel permeation chromatography using a cross-linked styrene-divinyl benzene column at a sample concentration of 1 milligram per milliliter and calibrated with polycarbonate standards, wherein the organopolysiloxane-polycarbonate block copolymer has polydiorganosiloxane blocks of the following formula: 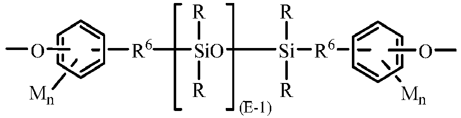 wherein each R is independently a same or different C₁₋₁₃ monovalent organic group; E has an average value of 5 to 100; R⁶ is a divalent C₂-C₈ aliphatic group; each M is a same or different group that is a halogen, cyano, nitro, C₁-C₈ alkylthio, C₁-C₈ alkyl, C₁-C₈ alkoxy, C₂-C₈ alkenyl, C₂-C₈ alkenyloxy group, C₃-C₈ cycloalkyl, C₃-C₈ cycloalkoxy, C₆-C₁₀ aryl, C₆-C₁₀ aryloxy, C₇-C₁₂ aralkyl, C₇-C₁₂ aralkoxy, C₇-C₁₂ alkylaryl, or C₇-C₁₂ alkylaryloxy; and each n is independently 0, 1, 2, 3, or 4;
(d) from 1 to 20 % of an oligomeric organophosphorus flame retardant,
(e) from 0.04 to 10% of a styrene-acrylonitrile encapsulated polytetrafluoroethylene,
(f) free of an impact modifier selected from the group consisting of elastomer-based graft copolymers and elastomer-based graft copolymers,
(g) from 0.1 to 2 wt.% of an antioxidant,
(h) from 0.1 to 2 wt.% of a quencher, and
(i) from 0.1 to 2 wt.% of a UV stabilizer.

9. The composition of claim 8, wherein the organophosphorus flame retardant is of the formula 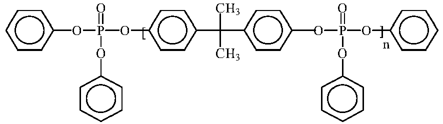 wherein n is from 1 to 5.

## Patentansprüche

1. Eine thermoplastische Zusammensetzung, aufweisend, basierend auf dem Gesamtgewicht der Zusammensetzung:
(a) von mehr als 12 bis 30 Gew.-% eines Polyesters;
(b) von 21,7 bis 81,7 Gew.-% eines Polycarbonats;
(c) von 5 bis weniger als 60 Gew.-% eines Organopolysiloxan-Polycarbonat-BlockCopolymers, welches 10 bis 50 Gew.-% von Polydiorganosiloxan-Einheiten aufweist;
(d) von 1 bis 20 Gew.-% eines Organophosphor-Flammschutzmittels;
(e) von 0,02 bis 5 Gew.-% eines fluorierten Polyolefins;
(f) frei von einem Schlagzähmodifizierer, ausgewählt aus der Gruppe umfassend Elastomer-basierten Pfropf-Copolymeren und Elastomer-basierten BlockCopolymeren; und
(g) von 0,1 bis 5 Gew.-% einer Additiv-Zusammensetzung, umfassend ein Antioxidans, ein Löschmittel, einen Ultraviolett-Licht-Stabilisierer oder eine Kombination der Genannten,
wobei die Zusammensetzung:
weniger als 1000 ppm pro Gewicht Brom und/oder Chlor-enthaltende Verbindungen,
ein Fließen von 25 bis 45 pro 10 Minuten bei 265°C und einer Scherlast von 5 kg gemessen gemäß ASTM D1238,
eine Vicat-Erweichungstemperatur von mehr als 100°C gemessen gemäß ASTM 1525 bei 50 Newton und einer Heizrate von 120°C/Stunde,
eine Izod-Kerbschlagfestigkeit von größer oder gleich 400 J/m gemessen bei 23°C gemäß ASTM D256 an einer aus der Zusammensetzung geformten Probestange mit einer Dicke von 3,2 und
ein UL 94 Entflammbarkeitsrating von V0 gemessen an einer geformten Probe mit einer Dicke von 1,5 mm aufweist.

2. Die Zusammensetzung nach Anspruch 1, wobei der Polyester in einem Anteil von 15 bis 25 Gew.-% vorhanden ist, und das Organopolysiloxan-Polycarbonat-Block-Copolymer in einem Anteil von 5 bis 30 Gew.-% vorhanden ist.

3. Die Zusammensetzung nach Anspruch 1 oder 2, wobei der Polyester Poly(ethylenterephthalat), Poly(butylenterephthalat) oder eine Kombination der Genannten ist.

4. Die Zusammensetzung nach einem der Ansprüche 1 bis 3, wobei das Organopolysiloxan-Polycarbonat-Block-Copolymer 50 bis 99 Gew.-% Carbonat-Einheiten und 1 bis 50 Gew.-% Siloxan-Einheiten und ein mittleres Molekulargewicht zwischen 2000 und 100000 Dalton, gemessen vermittels Gelpermeationschromatografie unter Verwendung einer quervernetzten Styrol-Divinyl-Benzol-Säule bei einer Probenkonzentration von 1 Milligramm pro Milliliter und mit Polycarbonat-Standards kalibriert, aufweist, wobei das Organopolysiloxan-Polycarbonat-Block-Copolymer Polydiorganosiloxan-Blöcke der folgenden Formel aufweist: 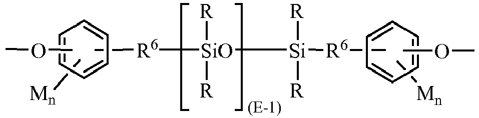 wobei jedes R unabhängig die gleiche oder unterschiedliche C₁₋₁₃ monovalente organische Gruppe ist; E einen mittleren Wert zwischen 5 und 100 aufweist; R⁶ eine divalente C₂-C₈ aliphatische Gruppe ist; jedes M die gleiche oder unterschiedliche Gruppe ist, die Halogen, Cyan, Nitro, C₁-C₈ Alkylthio, C₁-C₈ Alkyl, C₁-C₈ Alkoxy, C₂-C₈ Alkenyl, C₂-C₈ Alkenyloxy-Gruppe, C₃-C₈ Cycloalkyl, C₃-C₈ Cycloalkoxy, C₆-C₁₀ Aryl, C₆-C₁₀ Aryloxy, C₇-C₁₂ Aralkyl, C₇-C₁₂Aralkoxy, C₇-C₁₂Alkylaryl oder C₇-C₁₂ Alkylaryloxy ist; und jedes n unabhängig 0, 1, 2, 3 oder 4 ist.

5. Die Zusammensetzung nach einem der Ansprüche 1 bis 4, wobei das Organophosphor-Flammschutzmittel oligomer ist.

6. Die Zusammensetzung nach einem der Ansprüche 1 bis 5, wobei das fluorierte Polyolefin ein Styrol-Acrylonitril gekapseltes Polytetrafluorethylen ist.

7. Die Zusammensetzung nach einem der Ansprüche 1 bis 6, wobei der Schlagzähmodifizierer in einem Anteil von 0,25 bis 10 Gew.-% vorhanden ist und ein Methyl-Meth(Acrylat)-Butadien-Styrol, Acrylonitril-Butadien-Styrol, Styrol-Ethylen/Butylen-Styrol, Ethylen-Glycidyl Methacrylat-Methyl Acrylat oder eine Kombination der Genannten ist.

8. Die Zusammensetzung nach Anspruch 1, aufweisend, basierend auf dem Gesamtgewicht der Zusammensetzung:
(a) von 20 bis 25 Gew.-% eines Poly(ethylen terephthalats), eines Poly(butylen terephthalats) oder eine Kombination der Genannten;
(b) von 25 bis 73,5 Gew.-% eines Bisphenol-A Polycarbonats;
(c) von 5 bis 30 Gew.-% eines Organopolysiloxan-Polycarbonat Block Copolymers aufweisend 50 bis 99 Gew.-% Carbonat-Einheiten und 1 bis 50 Gew.-% Siloxan-Einheiten und ein mittleres Molekulargewicht zwischen 2000 und 100000 Dalton, gemessen vermittels Gelpermeationschromatografie unter Verwendung einer quervernetzten Styrol-Divinyl-Benzol-Säule bei einer Probenkonzentration von 1 Milligramm pro Milliliter und mit Polycarbonat-Standards kalibriert, aufweist, wobei das Organopolysiloxan-Polycarbonat-Block-Copolymer Polydiorganosiloxan-Blöcke der folgenden Formel aufweist: 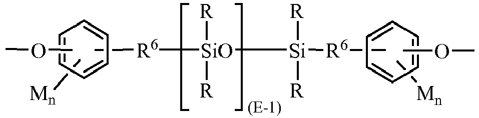 wobei jedes R unabhängig die gleiche oder unterschiedliche C₁₋₁₃ monovalente organische Gruppe ist; E einen mittleren Wert zwischen 5 und 100 aufweist; R⁶ eine divalente C₂-C₈ aliphatische Gruppe ist; jedes M die gleiche oder unterschiedliche Gruppe ist, die Halogen, Cyan, Nitro, C₁-C₈ Alklylthio, C₁-C₈ Alkyl, C₁-C₈ Alkoxy, C₂-C₈ Alkenyloxy-Gruppe, C₃-C₈ Cycloalkyl, C₃-C₈ Cycloalkoxy, C₆-C₁₀ Aryl, C₆-C₁₀ Aryloxy, oder C₇-C₁₂Alkylaryloxy ist; und jedes n unabhängig 0, 1, 2, 3 oder 4 ist;
(d) von 1 bis 20 % eines oligomeren Organophosphor-Flammschutzmittels;
(e) von 0,04 bis 10% eines ein Styrol-Acrylonitril gekapselten Polytetrafluorethylens;
(f) frei von einem Schlagzähmodifizierer, ausgewählt aus der Gruppe umfassend Elastomer-basierten Pfropf-Copolymeren und Elastomer-basierten BlockCopolymeren;
(g) von 0,1 bis 2 Gew.-% eines Antioxidans,
(h) von 0,1 bis 2 Gew.-% eines Löschmittels,
(i) von 0,1 bis 2 Gew.-% eines UV-Licht-Stabilisierers.

9. Die Zusammensetzung nach Anspruch 8, wobei das Organophosphor-Flammschutzmittel die folgende Formel aufweist: 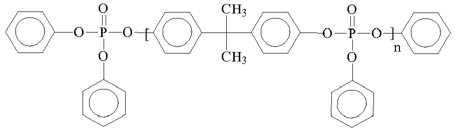 wobei n zwischen 1 und 5 ist.

## Revendications

1. Composition thermoplastique comprenant, par rapport au poids total de la composition :
(a) de plus de 12 à 30 % en poids d'un polyester ;
(b) de 21,7 à 81,7 % en poids d'un polycarbonate ;
(c) de 5 à moins de 60 % en poids d'un copolymère séquencé d'organopolysiloxane-polycarbonate comprenant de 10 à 50 % en poids de motifs polydiorganosiloxane ;
(d) de 1 à 20 % en poids d'un agent ignifuge organique phosphoré ;
(e) de 0,02 à 5 % en poids d'une polyoléfine fluorée ;
(f) pas de modificateur de choc choisi dans le groupe constitué par les copolymères greffés à base d'élastomère et les copolymères séquencés à base d'élastomère ; et
(g) de 0,1 à 5 % en poids d'une composition d'additif comprenant un antioxydant, un extincteur, un stabilisant à la lumière ultraviolette, ou une combinaison de ceux-ci,
laquelle composition a :
moins de 1000 ppm en poids de composé bromé et/ou chloré,
un débit de 25 à 45 par 10 minutes à 265°C et un effort de cisaillement de 5 kg telle que mesurée conformément à la norme ASTM D1238,
un point de ramollissement Vicat supérieur à 100°C, mesuré conformément à la norme ASTM 1525 à 50 newtons et à une vitesse de montée en température de 120°C/heure,
une résistance au choc Izod sur barreau entaillé supérieure ou égale à 400 J/m, mesurée à 23°C conformément à la norme ASTM D256 sur un barreau échantillon moulé à partir de la composition et ayant une épaisseur de 3,2, et
une note d'inflammabilité UL 94 de V0 mesurée sur un échantillon moulé ayant une épaisseur de 1,5 mm.

2. Composition selon la revendication 1, dans laquelle le polyester est présent en une quantité de 15 à 25 % en poids et le copolymère séquencé d'organopolysiloxane-polycarbonate est présent en une quantité de 5 à 30 % en poids.

3. Composition selon la revendication 1 ou 2, dans laquelle le polyester est le poly(téréphtalate d'éthylène), le poly(téréphtalate de butylène), ou une combinaison de ceux-ci.

4. Composition selon l'une quelconque des revendications 1 à 3, dans laquelle le copolymère séquencé d'organopolysiloxane-polycarbonate comprend 50 à 99 % en poids de motifs carbonate et 1 à 50 % en poids de motifs siloxane et a une masse moléculaire moyenne en masse de 2 000 à 100 000 daltons, telle que mesurée par chromatographie d'exclusion diffusion utilisant une colonne de styrène-divinylbenzène réticulé à une concentration d'échantillon de 1 milligramme par millilitre et étalonnée avec des étalons de polycarbonate, dans laquelle le copolymère séquencé d'organopolysiloxane-polycarbonate a des blocs polydiorganosiloxane de formule suivante : 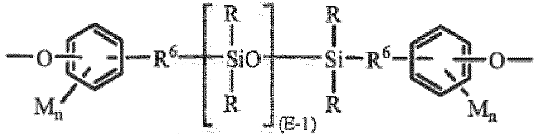 dans laquelle chaque R est indépendamment un groupe organique monovalent en C₁ à C₁₃ identique ou différent ; E vaut en moyenne de 5 à 100 ; R⁶ est un groupe aliphatique en C₂ à C₈ divalent ; chaque M est un groupe identique ou différent qui est un halogène, cyano, nitro, alkylthio en C₁ à C₈, alkyle en C₁ à C₈, alcoxy en C₁ à C₈, alcényle en C₂ à C₈, alcényloxy en C₂ à C₈, cycloalkyle en C₃ à C₈, cycloalcoxy en C₃ à C₈, aryle en C₆ à C₁₀, aryloxy en C₆ à C₁₀, aralkyle en C₇ à C₁₂, aralcoxy en C₇ à C₁₂, alkylaryle en C₇ à C₁₂, ou alkylaryloxy en C₇ à C₁₂; et chaque n vaut indépendamment 0, 1, 2, 3 ou 4.

5. Composition selon l'une quelconque des revendications 1 à 4, dans lequel l'agent ignifuge organique phosphoré est oligomère.

6. Composition selon l'une quelconque des revendications 1 à 5, dans lequel la polyoléfine fluorée est un polytétrafluoroéthylène encapsulé de styrène-acrylonitrile.

7. Composition selon l'une quelconque des revendications 1 à 6, dans laquelle le modifiant choc est présent en une quantité de 0,25 à 10 % en poids et est un (méth)acrylate de méthyle-butadiène-styrène, acrylonitrile-butadiène-styrène, styrène-éthylène/butylène-styrène, éthylène-méthacrylate de glycidyle-acrylate de méthyle, ou une combinaison de ceux-ci.

8. Composition selon la revendication 1, comprenant, par rapport au poids total de la composition :
(a) de 20 à 25 % en poids d'un poly(téréphtalate d'éthylène), d'un poly(téréphtalate de butylène), ou d'une combinaison de ceux-ci ;
(b) de 25 à 73,5 % en poids d'un polycarbonate de bisphénol A ;
(c) de 5 à 30 % en poids d'un copolymère séquencé d'organopolysiloxane-polycarbonate comprenant 50 à 99 % en poids de motifs carbonate et 1 à 50 % en poids de motifs siloxane et ayant une masse moléculaire moyenne en masse de 2 000 à 100 000 daltons, telle que mesurée par chromatographie d'exclusion diffusion utilisant une colonne de styrène-divinylbenzène réticulé à une concentration d'échantillon de 1 milligramme par millilitre et étalonnée avec des étalons de polycarbonate, lequel copolymère séquencé d'organopolysiloxane-polycarbonate a des blocs polydiorganosiloxane de formule suivante : 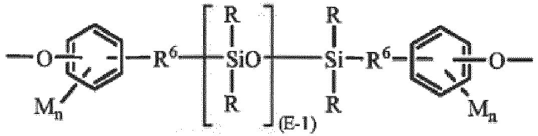 dans laquelle chaque R est indépendamment un groupe organique monovalent en C₁ à C₁₃ identique ou différent ; E vaut en moyenne de 5 à 100 ; R⁶ est un groupe aliphatique en C₂ à C₈ divalent ; chaque M est un groupe identique ou différent qui est un halogène, cyano, nitro, alkylthio en C₁ à C₈, alkyle en C₁ à C₈, alcoxy en C₁ à C₈, alcényle en C₂ à C₈, alcényloxy en C₂ à C₈, cycloalkyle en C₃ à C₈, cycloalcoxy en C₃ à C₈, aryle en C₆ à C₁₀, aryloxy en C₆ à C₁₀, aralkyle en C₇ à C₁₂, aralcoxy en C₇ à C₁₂, alkylaryle en C₇ à C₁₂, ou alkylaryloxy en C₇ à C₁₂; et chaque n vaut indépendamment 0, 1, 2, 3 ou 4 ;
(d) de 1 à 20 % d'un agent ignifuge organique phosphoré,
(e) de 0,04 à 10 % d'un polytétrafluoroéthylène encapsulé de styrène-acrylonitrile,
(f) pas de modifiant choc choisi dans le groupe constitué par les copolymères greffés à base d'élastomère et les copolymères séquencés à base d'élastomère,
(g) de 0,1 à 2 % en poids d'un antioxydant,
(h) de 0,1 à 2 % en poids d'un extincteur, et
(i) de 0,1 à 2 % en poids d'un stabilisant UV.

9. Composition selon la revendication 8, dans laquelle l'agent ignifuge organique phosphoré est de formule 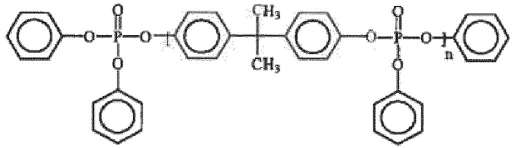 dans laquelle n vaut de 1 à 5.
